# EUROPEAN PATENT APPLICATION

(11) **EP 4 120 159 A1**
(43) Date of publication of application: **18.01.2023**
(21) Application number: 21767570.1
(22) Date of filing: 23.02.2021
(51) Int. Cl.: G06Q 10/06

(54) **METHOD AND APPARATUS FOR GENERATING RISK ASSESSMENT MODEL AND RISK ASSESSMENT METHOD AND APPARATUS**

(30) Priority: 11.03.2020 CN 202010168314
(71) Applicant: Tsinghua University, Haidian District, Beijing 100084 (CN); Nuctech Company Limited, TongFang Building Shuangqinglu Haidian District Beijing 100084 (CN)
(72) Inventor: CHEN, Zhiqiang, Beijing 100084 (CN); ZHANG, Li, Beijing 100084 (CN); LI, Yuanjing, Beijing 100084 (CN); XING, Yuxiang, Beijing 100084 (CN); CHE, Jiahang, Beijing 100084 (CN); ZHANG, Yan, Beijing 100084 (CN); LI, Qiang, Beijing 100084 (CN); LI, Wei, Beijing 100084 (CN); FU, Gang, Beijing 100084 (CN)
(74) Representative: Cabinet Beau de Loménie
(86) International application number: PCT/CN2021/077487
(87) International publication number: WO 2021/179907

(57) **Abstract**

The embodiments of the present disclosure disclose a method of generating a risk assessing model, including: preprocessing a plurality of declaration information to obtain a plurality of first entries included in the plurality of declaration information (S 110); performing a graph network analysis on information related to the plurality of first entries so as to generate a first result (S120); performing a feature engineering processing on the plurality of first entries so as to generate a second result (S130); and training a neural network by using the first result and the second result so as to obtain the risk assessing model (S140).

## Description

### CROSS REFERENCE TO RELATED APPLICATION(S)

This application claims priority to Chinese patent Application No. 202010168314.8 filed on March 11, 2020, the content of which are incorporated herein by reference in their entirety.

### TECHNICAL FIELD

The present disclosure relates to a field of data processing technology, and in particular to a method and an apparatus of generating a risk assessing model and a method and an apparatus of assessing a risk.

### BACKGROUND

Under a background of growing international trade, customs clearance data is becoming larger and larger. How to screen out a high-risk declaration information by analyzing declaration information and estimating a risk value is an important direction of intelligent inspection at present. With an in-depth development of computer technology, mining of the high-risk declaration information based on big data is supported by both "software" and "hardware".

At present, there are not many researches on a risk prediction of the declaration information. In an existing analysis method, feature combinations sensitive to the risk value are screened out through experts and manual experience by mainly building a risk rule model, that is, based on historical data, and the risk value is then derived from a machine learning model. The existing risk rule model has the following drawbacks. First, experts and manual experience are relied on. However, the high-risk declaration information is not static, but evolves in real time. Once the rule model is determined, it is difficult for the model to adapt to a new high-risk model that is evolved. Second, it is difficult to mine a deep-level related information, so it is not easy to capture gang crimes and group risks.

### SUMMARY

According to an aspect of the embodiments of the present disclosure, there is provided a method of generating a risk assessing model, including:
preprocessing a plurality of declaration information to obtain a plurality of first entries included in the plurality of declaration information;
performing a graph network analysis on information related to the plurality of first entries so as to generate a first result;
performing a feature engineering processing on the plurality of first entries so as to generate a second result; and
training a neural network by using the first result and the second result so as to obtain the risk assessing model.

In an embodiment, the performing a graph network analysis on information related to the plurality of first entries so as to generate a first result includes:
selecting, from all the first entries included in the plurality of declaration information, first entries in conformity with at least one predefined association category as second entries; and
inputting the second entries as node information and an association relationship between the second entries as edge information into a graph network so as to generate a plurality of first vectors corresponding to the second entries respectively as the first result.

In an embodiment, the performing a feature engineering processing on the plurality of first entries so as to generate a second result includes:
performing the feature engineering processing on the plurality of first entries so as to obtain a plurality of second vectors corresponding to the plurality of first entries as the second result.

In an embodiment, the training a neural network by using the first result and the second result so as to obtain the risk assessing model includes:
generating a plurality of third vectors respectively corresponding to the plurality of declaration information according to the plurality of first vectors and the plurality of second vectors; and
training the neural network by using the plurality of third vectors so as to obtain the risk assessing model.

In an embodiment, the selecting, from all the first entries included in the plurality of declaration information, first entries in conformity with at least one predefined association category as second entries includes:
selecting at least one category as the predefined association category from a plurality of categories to which the plurality of first entries in the plurality of declaration information belong, wherein the at least one category causes the declaration information to correlate and mutually affect a risk prediction probability.

According to another aspect of the embodiments of the present disclosure, there is provided a method of assessing a risk, including:
preprocessing a declaration information to be assessed to obtain a plurality of first entries included in the declaration information to be assessed;
performing a graph network analysis on information related to the plurality of first entries so as to generate a first result;
performing a feature engineering processing on the plurality of first entries so as to generate a second result; and
obtaining a risk assessment result of the declaration information to be assessed by using a risk assessing model according to the first result and the second result,
wherein the risk assessing model is obtained by using the method of generating a risk assessing model through a plurality of declaration information.

In an embodiment, the performing a graph network analysis on information related to the plurality of first entries so as to generate a first result includes:
selecting, from the plurality of first entries, first entries in conformity with at least one predefined association category as second entries; and
inputting the second entries as node information and an association relationship between the second entries as edge information into a graph network so as to generate a first vector corresponding to the second entries as the first result.

In an embodiment, the performing a feature engineering processing on the plurality of first entries so as to generate a second result includes:
performing the feature engineering processing on the plurality of first entries so as to obtain a second vector corresponding to the plurality of first entries as the second result.

In an embodiment, the obtaining a risk assessment result of the declaration information to be assessed by using a risk assessing model according to the first result and the second result includes:
generating a third vector corresponding to the declaration information to be assessed according to the first vector and the second vector; and
inputting the third vector into the risk assessing model so as to obtain the risk assessment result of the declaration information to be assessed.

In an embodiment, the selecting, from the plurality of first entries, first entries in conformity with at least one predefined association category as second entries includes:
selecting at least one category as the predefined association category from a plurality of categories to which the plurality of first entries belong, wherein the at least one category causes the declaration information to be assessed and another declaration information to correlate and mutually affect a risk prediction probability.

According to yet another aspect of the embodiments of the present disclosure, there is provided an apparatus of generating a risk assessing model, including:
a preprocessing module configured to preprocess a plurality of declaration information to obtain a plurality of first entries included in the plurality of declaration information;
a graph network analysis module configured to perform a graph network analysis on information related to the plurality of first entries so as to generate a first result;
a feature engineering processing module configured to perform a feature engineering processing on the plurality of first entries so as to generate a second result; and
a training module configured to train a neural network by using the first result and the second result so as to obtain the risk assessing model.

In an embodiment, the graph network analysis module is further configured to:
select, from all the first entries included in the plurality of declaration information, first entries in conformity with at least one predefined association category as second entries; and
input the second entries as node information and an association relationship between the second entries as edge information into a graph network so as to generate a plurality of first vectors corresponding to the second entries respectively as the first result.

In an embodiment, the feature engineering processing module is further configured to:
perform the feature engineering processing on the plurality of first entries so as to obtain a plurality of second vectors corresponding to the plurality of first entries as the second result.

In an embodiment, the training module is further configured to:
generate a plurality of third vectors respectively corresponding to the plurality of declaration information according to the plurality of first vectors and the plurality of second vectors; and
train the neural network by using the plurality of third vectors so as to obtain the risk assessing model.

In an embodiment, the graph network analysis module is further configured to:
select at least one category as the predefined association category from a plurality of categories to which the plurality of first entries in the plurality of declaration information belong, wherein the at least one category causes the declaration information to correlate and mutually affect a risk prediction probability.

According to yet another aspect of the embodiments of the present disclosure, there is provided an apparatus of assessing a risk, including:
a preprocessing module configured to preprocess a declaration information to be assessed to obtain a plurality of first entries included in the declaration information to be assessed;
a graph network analysis module configured to perform a graph network analysis on information related to the plurality of first entries so as to generate a first result;
a feature engineering processing module configured to perform a feature engineering processing on the plurality of first entries so as to generate a second result; and
an assessment module configured to obtain a risk assessment result of the declaration information to be assessed by using a risk assessing model according to the first result and the second result,
wherein the risk assessing model is obtained by using the method of generating a risk assessing model through a plurality of declaration information.

In an embodiment, the graph network analysis module is further configured to:
select, from the plurality of first entries, first entries in conformity with at least one predefined association category as second entries; and
input the second entries as node information and an association relationship between the second entries as edge information into a graph network so as to generate a first vector corresponding to the second entries as the first result.

In an embodiment, the feature engineering processing module is further configured to:
perform the feature engineering processing on the plurality of first entries so as to obtain a second vector corresponding to the plurality of first entries as the second result.

In an embodiment, the assessment module is further configured to:
generate a third vector corresponding to the declaration information to be assessed according to the first vector and the second vector; and
input the third vector into the risk assessing model so as to obtain the risk assessment result of the declaration information to be assessed.

In an embodiment, the graph network analysis module is further configured to:
select at least one category as the predefined association category from a plurality of categories to which the plurality of first entries belong, wherein the at least one category causes the declaration information to be assessed and another declaration information to correlate and mutually affect a risk prediction probability.

### BRIEF DESCRIPTION OF THE DRAWINGS

The above and other objectives, features, and advantages of the present disclosure will be clearer through the following description of embodiments of the present disclosure with reference to the accompanying drawings.
FIG. 1 shows a flowchart of a method of generating a risk assessing model according to the embodiments of the present disclosure.
FIG. 2 shows a flowchart of a method of assessing a risk according to the embodiments of the present disclosure.
FIG. 3 shows a block diagram of an apparatus of generating a risk assessing model according to the embodiments of the present disclosure.
FIG. 4 shows a block diagram of an apparatus of assessing a risk according to the embodiments of the present disclosure.
FIG. 5 shows a schematic diagram of a computer system according to the embodiments of the present disclosure.

Not all circuits or structures of the embodiments are shown in the accompanying drawings. Throughout the accompanying drawings, the same reference numerals indicate the same or similar components or features.

### DETAILED DESCRIPTION OF EMBODIMENTS

The embodiments of the present disclosure will be described below with reference to the accompanying drawings. It should be understood, however, that the descriptions are exemplary only, and are not intended to limit the scope of the present disclosure. In addition, in the following description, descriptions of well-known structures and techniques are omitted to avoid unnecessarily obscuring the concepts of the present disclosure.

The terms used herein are for the purpose of describing specific embodiments only and are not intended to limit the present disclosure. As used herein, the words "a," "an," and "the", etc. shall also include the meanings of "plurality of," "variety of," unless the context clearly dictates otherwise. Furthermore, the terms "including", "containing", etc. used herein indicate the presence of features, steps, operations and/or components, but do not preclude the presence or addition of one or more other features, steps, operations or components.

All terms (including technical and scientific terms) used herein have the meanings as commonly understood by those skilled in the art, unless otherwise defined. It should be noted that the terms used herein should be construed to have meanings consistent with the context of this specification and should not be construed in an idealized or overly rigid manner.

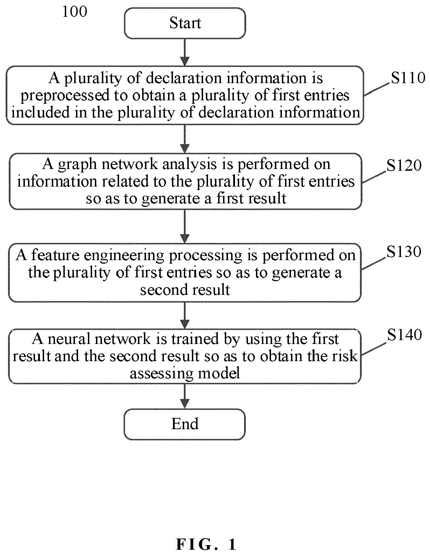

FIG. 1 shows a flowchart of a method 100 of generating a risk assessing model according to the embodiments of the present disclosure. The method 100 of generating a risk assessing model may include the following steps.

In step S110, a plurality of declaration information may be preprocessed to obtain a plurality of first entries included in the plurality of declaration information. Step S110 may include: performing data cleaning on the plurality of declaration information so as to obtain the plurality of first entries included in the plurality of declaration information. After the preprocessing (e.g., data cleaning, etc.), the number of the first entries included in each declaration information is the same.

In step S120, a graph network analysis may be performed on information related to the plurality of first entries so as to generate a first result. Step S120 may include: selecting, from all the first entries included in the plurality of declaration information, first entries in conformity with at least one predefined association category as second entries, and inputting the second entries as node information and an association relationship between the second entries as edge information into a graph network so as to generate a plurality of first vectors corresponding to the second entries respectively as the first result. The graph network may be a graph convolution, a graph embedding, etc. The selecting, from all the first entries included in the plurality of declaration information, first entries in conformity with at least one predefined association category as second entries may include: selecting at least one category as the predefined association category from a plurality of categories to which the plurality of first entries in the plurality of declaration information belong, wherein the at least one category causes the declaration information to correlate and mutually affect a risk prediction probability. For example, the predefined association category may include a shipper, a consignee, a logistics party, goods, a customs broker, etc. Taking the category to which the entry belongs including the shipper as an example, the shipper may be selected as an association category, because when a declaration information is risky, other declaration information related to the shipper in the declaration information may be at high risk.

In step S130, a feature engineering processing may be performed on the plurality of first entries so as to generate a second result. Step S130 may include: performing the feature engineering processing on the plurality of first entries so as to obtain a plurality of second vectors corresponding to the plurality of first entries as the second result.

In step S140, a neural network may be trained by using the first result and the second result so as to obtain the risk assessing model. Step S140 may include: generating a plurality of third vectors respectively corresponding to the plurality of declaration information according to the plurality of first vectors and the plurality of second vectors, and training the neural network by using the plurality of third vectors so as to obtain the risk assessing model. The generating a plurality of third vectors respectively corresponding to the plurality of declaration information according to the plurality of first vectors and the plurality of second vectors may include: determining a first vector and a second vector corresponding to each of the plurality of declaration information according to the plurality of first vectors and the plurality of second vectors; and splicing the first vector and the second vector corresponding to each of the plurality of declaration information so as to generate a third vector corresponding to each of the plurality of declaration information.

The above-mentioned method of generating a risk assessing model will be described below by taking three declaration information as an example. The three declaration information may include a first declaration information, a second declaration information and a third declaration information. The first declaration information is that 100 computers of Lenovo are sent from user A to user B, the second declaration information is that 200 motherboards of Intel are sent from user C to user B, and the third declaration information is that 50 displays of Lenovo are sent from user C to user D.

First, the above-mentioned three declaration information are preprocessed (e.g., data cleaning, etc.) so as to obtain a plurality of first entries. For example, entries included in the first declaration information are Lenovo, 100, computer, user A and user B, entries included in the second declaration information are Intel, 200, motherboard, user C and user B, and entries included in the third declaration information are Lenovo, 50, display, user C, and user D. The plurality of first entries obtained by preprocessing (e.g., data cleaning, etc.) the above-mentioned three declaration information are Lenovo, 100, computer, user A, user B, Intel, 200, motherboard, user C, 50, display, and user D.

Then, assuming that the predefined association categories are a brand, a type of goods, a shipper, and a consignee, the second entries in conformity with the predefined association category selected from the first entries included in the three declaration information are Lenovo, Intel, computer, motherboard, display, user A, user B, user C, and user D. Lenovo, Intel, computer, motherboard, display, user A, user B, user C and user D as node information and an association relationship between the node information as edge information are input into a graph network (for example, graph convolution, graph embedding etc.) so as to generate a plurality of first vectors respectively corresponding to the second entries. For example, a first vector corresponding to Lenovo is s1, a first vector corresponding to Intel is s2, a first vector corresponding to the computer is s3, a first vector corresponding to the motherboard is s4, a first vector corresponding to the display is s5, a first vector corresponding to user A is s6, a first vector corresponding to user B is s7, a first vector corresponding to user C is s8, and a first vector corresponding to user D is s9.

Next, a feature engineering processing is performed on the plurality of first entries so as to obtain second vectors corresponding to the first entries, respectively. For example, a second vector corresponding to the plurality of first entries in the first declaration information is [q₁1,q₁2,q₁3,...,q₁k], where k is a positive integer, a second vector corresponding to the plurality of first entries in the second declaration information is [q₂1,q₂2,q₂3,...,q₂k], and a second vector corresponding to the plurality of first entries in the third declaration information is [q₃1,q₃2,q₃3,...,q₃k].

Then, a plurality of third vectors respectively corresponding to the three declaration information are generated according to the plurality of first vectors and the plurality of second vectors. For example, the first vector corresponding to the first declaration information is [s1,s3,s6,s7], and the second vector corresponding to the first declaration information is [q₁1,q₁2,q₁3,...,q₁k], so the third vector corresponding to the first declaration information is [s1,s3,s6,s7,q₁1,q₁2,q₁3,...,q₁k] through vector splicing; the first vector corresponding to the second declaration information is [s2,s4,s8,s7], and the second vector corresponding to the second declaration information is [q₂1,q₂2,q₂3,...,q₂k], so the third vector corresponding to the second declaration information is [s2,s4,s8,s7,q₂1,q₂2,q₂3,...,q₂k] through vector splicing; and the first vector corresponding to the third declaration information is [s1,s5,s8,s9], and the second vector corresponding to the third declaration information is [q₃1,q₃2,q₃3,...,q₃k], so the third vector corresponding to the third declaration information is [s1,s5,s8,s9,q₃1,q₃2,q₃3,...,q₃k] through vector splicing.

Finally, a neural network is trained by using three third vectors [s1,s3,s6,s7,q₁1,q₁2,q₁3,...,q₁k],[s2,s4,s8,s7,q₂1,q₂2,q₂3,...,q₂k] and [s1,s5,s8,s9,q₃1,q₃2,q₃3,...,q₃k] so as to obtain the risk assessing model. An output of the risk assessing model may be risky and non-risky, or may be a probability of being risky, etc.

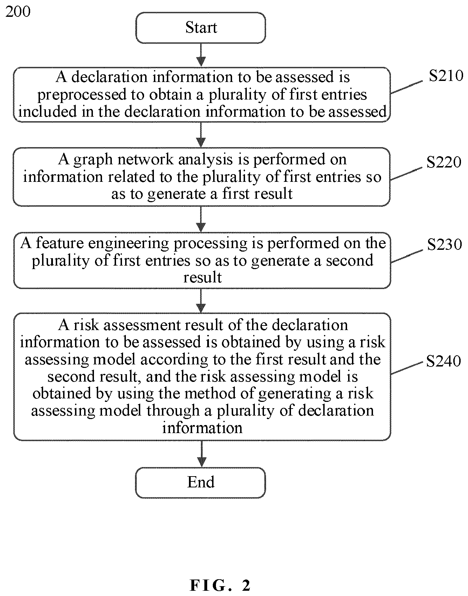

The process of training a neural network to obtain the risk assessing model through the plurality of declaration information has been described above. The process of assessing declaration information to be assessed by using the obtained risk assessing model will be described below. FIG. 2 shows a flowchart of a method 200 of assessing a risk according to the embodiments of the present disclosure. The method 200 of assessing a risk may include the following steps.

In step S210, a declaration information to be assessed may be preprocessed to obtain a plurality of first entries included in the declaration information to be assessed. Step S210 may include: performing data cleaning on the declaration information to be assessed so as to obtain the plurality of first entries included in the declaration information to be assessed.

In step S220, a graph network analysis may be performed on information related to the plurality of first entries so as to generate a first result. Step S220 may include: selecting, from the plurality of first entries, first entries in conformity with at least one predefined association category as second entries; and inputting the second entries as node information and an association relationship between the second entries as edge information into a graph network so as to generate a first vector corresponding to the second entries as the first result. The graph network may be a graph convolution, a graph embedding, etc. The selecting, from the plurality of first entries, first entries in conformity with at least one predefined association category as second entries may include: selecting at least one category as the predefined association category from a plurality of categories to which the plurality of first entries belong, wherein the at least one category causes the declaration information to be assessed and another declaration information to correlate and mutually affect a risk prediction probability. For example, the predefined association category may include a shipper, a consignee, a logistics party, goods, a customs broker, etc.

In step S230, a feature engineering processing may be performed on the plurality of first entries so as to generate a second result. Step S230 may include: performing the feature engineering processing on the plurality of first entries so as to obtain a second vector corresponding to the plurality of first entries as the second result.

In step S240, a risk assessment result of the declaration information to be assessed may be obtained by using a risk assessing model according to the first result and the second result, wherein the risk assessing model is obtained by using the method 100 of generating a risk assessing model through a plurality of declaration information. Step S240 may include: generating a third vector corresponding to the declaration information to be assessed according to the first vector and the second vector, and inputting the third vector into the risk assessing model so as to obtain the risk assessment result of the declaration information to be assessed. The generating a third vector corresponding to the declaration information to be assessed according to the first vector and the second vector may include: splicing the first vector and the second vector so as to generate the third vector corresponding to the declaration information to be assessed.

The present disclosure performs a risk estimation on the declaration information by using a deep learning and graph network. Compared with existing technologies, on the one hand, entry features are combined through the feature engineering processing and the entry feature combination is input into a deep learning network for deep learning so as to obtain the risk assessing model, thereby providing an intelligent method of assessing a risk. The intelligent method integrates human experience and increases completeness of entry feature selection. On the other hand, through a graph network analysis, associated entry features take into account an impact of risk diffusion, which is conducive to an analysis of gang crimes and group risks.

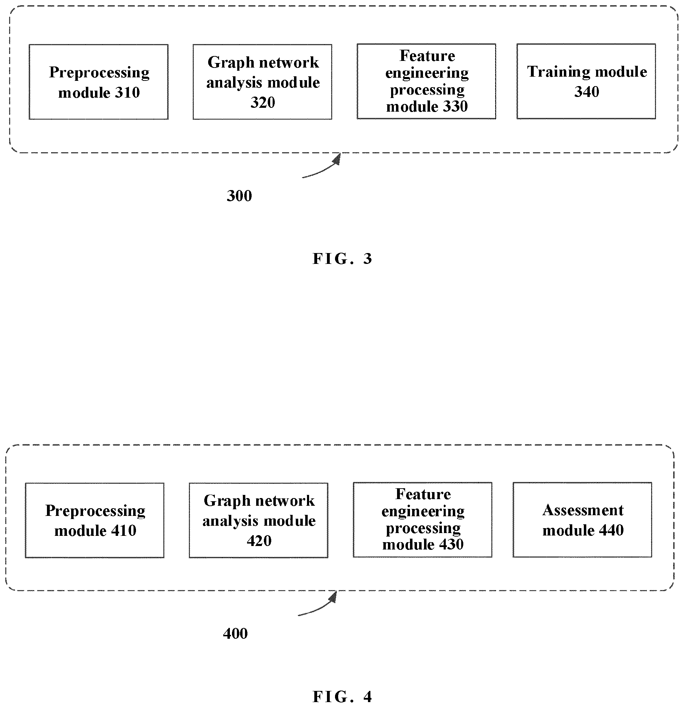

FIG. 3 shows a schematic diagram of an apparatus 300 of generating a risk assessing model according to the embodiments of the present disclosure. The apparatus 300 of generating a risk assessing model may include a preprocessing module 310, a graph network analysis module 320, a feature engineering processing module 330 and a training module 340.

The preprocessing module 310 may be configured to preprocess a plurality of declaration information to obtain a plurality of first entries included in the plurality of declaration information. The preprocessing module 310 may be further configured to: perform data cleaning on the plurality of declaration information so as to obtain the plurality of first entries included in the plurality of declaration information. After the preprocessing (e.g., data cleaning), the number of the first entries included in each declaration information is the same.

The graph network analysis module 320 may be configured to perform a graph network analysis on information related to the plurality of first entries so as to generate a first result. The graph network analysis module 320 is further configured to: select, from all the first entries included in the plurality of declaration information, first entries in conformity with at least one predefined association category as second entries; and input the second entries as node information and an association relationship between the second entries as edge information into a graph network so as to generate a plurality of first vectors corresponding to the second entries respectively as the first result. The graph network may be a graph convolution, a graph embedding, etc. The graph network analysis module 320 is further configured to: select at least one category as the predefined association category from a plurality of categories to which the plurality of first entries in the plurality of declaration information belong, wherein the at least one category causes the declaration information to correlate and mutually affect a risk prediction probability. For example, the predefined association category may include a shipper, a consignee, a logistics party, goods, a customs broker, etc. Taking the category to which the entry belongs including the shipper as an example, the shipper may be selected as an association category, because when one declaration information is risky, other declaration information related to the shipper in the declaration information may be at high risk.

The feature engineering processing module 330 may be configured to perform a feature engineering processing on the plurality of first entries so as to generate a second result. The feature engineering processing module 340 may be further configured to perform the feature engineering processing on the plurality of first entries so as to obtain a plurality of second vectors corresponding to the plurality of first entries as the second result.

The training module 340 may be configured to train a neural network by using the first result and the second result so as to obtain the risk assessing model. The training module 340 may be further configured to: generate a plurality of third vectors respectively corresponding to the plurality of declaration information according to the plurality of first vectors and the plurality of second vectors; and train the neural network by using the plurality of third vectors so as to obtain the risk assessing model. The training module 340 may be further configured to: determine a first vector and a second vector corresponding to each of the plurality of declaration information according to the plurality of first vectors and the plurality of second vectors; and splice the first vector and the second vector corresponding to each declaration information so as to generate a third vector corresponding to each declaration information.

FIG. 4 shows a block diagram of an apparatus 400 of assessing a risk according to the embodiments of the present disclosure. The apparatus 400 of assessing a risk may include a preprocessing module 410, a graph network analysis module 420, a feature engineering processing module 430 and an assessment module 440.

The preprocessing module 410 may be configured to preprocess a declaration information to be assessed to obtain a plurality of first entries included in the declaration information to be assessed. The preprocessing module 410 may be further configured to perform data cleaning on the declaration information to be assessed so as to obtain the plurality of first entries included in the declaration information to be assessed.

The graph network analysis module 420 may be configured to perform a graph network analysis on information related to the plurality of first entries so as to generate a first result. The graph network analysis module 420 may be further configured to: select, from the plurality of first entries, first entries in conformity with at least one predefined association category as second entries; and input the second entries as node information and an association relationship between the second entries as edge information into a graph network so as to generate a first vector corresponding to the second entries as the first result. The graph network may be a graph convolution, a graph embedding, etc. The graph network analysis module 420 may be further configured to: select at least one category as the predefined association category from a plurality of categories to which the plurality of first entries belong, wherein the at least one category causes the declaration information to be assessed and another declaration information to correlate and mutually affect a risk prediction probability. For example, the predefined association category may include a shipper, a consignee, a logistics party, goods, a customs broker, etc.

The feature engineering processing module 430 may be configured to perform a feature engineering processing on the plurality of first entries so as to generate a second result. The feature engineering processing module 430 may be further configured to perform the feature engineering processing on the plurality of first entries so as to obtain a second vector corresponding to the plurality of first entries as the second result.

The assessment module 440 may be configured to obtain a risk assessment result of the declaration information to be assessed by using a risk assessing model according to the first result and the second result, wherein the risk assessing model is obtained by using the method of generating a risk assessing model 100 through a plurality of declaration information. The assessment module 440 may be further configured to: generate a third vector corresponding to the declaration information to be assessed according to the first vector and the second vector; and input the third vector into the risk assessing model so as to obtain the risk assessment result of the declaration information to be assessed. The assessment module 440 may be further configured to: splice the first vector and the second vector so as to generate the third vector corresponding to the declaration information to be assessed.

The present disclosure performs a risk estimation on the declaration information by using a deep learning and graph network. Compared with the existing technologies, on the one hand, entry features are combined through the feature engineering processing and the entry feature combination is input into a deep learning network for deep learning so as to obtain the risk assessing model, thereby providing an intelligent method of assessing a risk. The intelligent method integrates human experience and increases completeness of entry feature selection. On the other hand, through a graph network analysis, associated entry features take into account an impact of risk diffusion, which is conducive to an analysis of gang crimes and group risks.

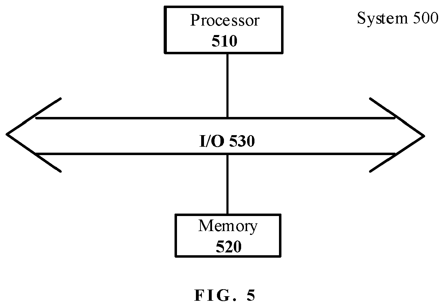

FIG. 5 shows a schematic diagram of a computer system according to the embodiments of the present disclosure. A system 500 may include a processor 510, for example, a digital signal processor (DSP). The processor 510 may be a single device or a plurality of devices for performing different actions of the process described herein. The system 500 may also include an input/output (I/O) device 530 for receiving signals from or sending signals to other entities.

In addition, the system 500 may include a memory 520. The memory 520 may be in a form of non-volatile or volatile memory, for example, an electrically erasable programmable read only memory (EEPROM), a flash memory, etc. The memory 520 may store computer-readable instructions which, when executed by the processor 510, may cause the processor to perform the actions described herein.

Some block diagrams and/or flow diagrams are shown in the accompanying drawings. It will be understood that some blocks in the block diagrams and/or flowcharts, or combinations thereof, may be implemented by computer program instructions. The computer program instructions may be provided to a processor of a general-purpose computer, a dedicated-purpose computer, or other programmable data processing apparatus, so that the instructions, when executed by the processor, may create means for implementing functions/operations illustrated in the block diagrams and/or flow diagrams.

Therefore, the techniques of the present disclosure may be implemented in a form of hardware and/or software (including a firmware, a microcode, etc.). In addition, the techniques of the present disclosure may take a form of a computer program product on a computer-readable medium having stored instructions for use by or in conjunction with an instruction execution system (e.g., one or more processors). In the context of the present disclosure, the computer-readable medium may be any medium that may contain, store, communicate, propagate, or transmit instructions. For example, the computer-readable medium may include, but is not limited to, an electrical, magnetic, optical, electromagnetic, infrared, or semiconductor system, apparatus, device, or propagation medium. Specific examples of computer-readable medium include: a magnetic storage device, such as a magnetic tape or hard disk (HDD); an optical storage device, such as a compact disk (CD-ROM); a memory, such as a random access memory (RAM) or flash memory; and/or a wired /wireless communication link.

The above-mentioned detailed description has set forth many embodiments of a method and apparatus of generating a risk assessing model, a method of assessing a risk and apparatus, and a computer system using schematic diagrams, flowcharts, and/or examples. When the diagrams, flowcharts and/or examples include one or more functions and/or operations, those skilled in the art will understand that each function and/or operation in the diagrams, flowcharts or examples may be implemented individually and/or collectively by various structures, hardware, software, firmware, or virtually any combination thereof. In an embodiment, portions of the subject matter described in the embodiments of the present disclosure may be implemented by an application specific integrated circuit (ASIC), a field programmable gate array (FPGA), a digital signal processor (DSP), or other integrated formats. Those skilled in the art will recognize, however, that some aspects of the embodiments disclosed herein may equally be implemented, in whole or in part, in an integrated circuit, as one or more computer programs running on one or more computers (e.g., implemented as one or more programs running on one or more computer systems), implemented as one or more programs running on one or more processors (e.g., implemented as one or more programs running on one or more microprocessors), implemented as firmware, or substantially implemented as any combination of the above. Those skilled in the art will have the ability to design circuits and/or write software and and/or firmware codes based on the present disclosure. Furthermore, those skilled in the art will recognize that mechanisms of the subject matter of the present disclosure may be distributed as program products in many forms, and that exemplary embodiments of the subject matter of the present disclosure are applicable regardless of the specific type of a signal bearing medium actually used to perform the distribution. Examples of the signal bearing medium include, but are not limited to: a recordable-type medium such as a floppy disk, a hard drive, a compact disk (CD), a digital versatile disk (DVD), a digital magnetic tape, a computer memory, etc.; and a transmission-type medium such as a digital and /or analog communication medium (e.g., a fiber optic cable, waveguide, a wired communication link, a wireless communication link, etc.).

## Claims

1. A method of generating a risk assessing model, comprising:
preprocessing a plurality of declaration information to obtain a plurality of first entries included in the plurality of declaration information;
performing a graph network analysis on information related to the plurality of first entries so as to generate a first result;
performing a feature engineering processing on the plurality of first entries so as to generate a second result; and
training a neural network by using the first result and the second result so as to obtain the risk assessing model.

2. The method according to claim 1, wherein the performing a graph network analysis on information related to the plurality of first entries so as to generate a first result comprises:
selecting, from all the first entries included in the plurality of declaration information, first entries in conformity with at least one predefined association category as second entries; and
inputting the second entries as node information and an association relationship between the second entries as edge information into a graph network so as to generate a plurality of first vectors corresponding to the second entries respectively as the first result.

3. The method according to claim 2, wherein the performing a feature engineering processing on the plurality of first entries so as to generate a second result comprises:
performing the feature engineering processing on the plurality of first entries so as to obtain a plurality of second vectors corresponding to the plurality of first entries as the second result.

4. The method according to claim 3, wherein the training a neural network by using the first result and the second result so as to obtain the risk assessing model comprises:
generating a plurality of third vectors respectively corresponding to the plurality of declaration information according to the plurality of first vectors and the plurality of second vectors; and
training the neural network by using the plurality of third vectors so as to obtain the risk assessing model.

5. The method according to claim 2, wherein the selecting, from all the first entries included in the plurality of declaration information, first entries in conformity with at least one predefined association category as second entries comprises:
selecting at least one category as the predefined association category from a plurality of categories to which the plurality of first entries in the plurality of declaration information belong, wherein the at least one category causes the declaration information to correlate and mutually affect a risk prediction probability.

6. A method of assessing a risk, comprising:
preprocessing a declaration information to be assessed to obtain a plurality of first entries included in the declaration information to be assessed;
performing a graph network analysis on information related to the plurality of first entries so as to generate a first result;
performing a feature engineering processing on the plurality of first entries so as to generate a second result; and
obtaining a risk assessment result of the declaration information to be assessed by using a risk assessing model according to the first result and the second result,
wherein the risk assessing model is obtained by using the method of generating a risk assessing model according to claim 1 through a plurality of declaration information.

7. The method according to claim 6, wherein the performing a graph network analysis on information related to the plurality of first entries so as to generate a first result comprises:
selecting, from the plurality of first entries, first entries in conformity with at least one predefined association category as second entries; and
inputting the second entries as node information and an association relationship between the second entries as edge information into a graph network so as to generate a first vector corresponding to the second entries as the first result.

8. The method according to claim 7, wherein the performing a feature engineering processing on the plurality of first entries so as to generate a second result comprises:
performing the feature engineering processing on the plurality of first entries so as to obtain a second vector corresponding to the plurality of first entries as the second result.

9. The method according to claim 8, wherein the obtaining a risk assessment result of the declaration information to be assessed by using a risk assessing model according to the first result and the second result comprises:
generating a third vector corresponding to the declaration information to be assessed according to the first vector and the second vector; and
inputting the third vector into the risk assessing model so as to obtain the risk assessment result of the declaration information to be assessed.

10. The method of assessing a risk according to claim 7, wherein the selecting, from the plurality of first entries, first entries in conformity with at least one predefined association category as second entries comprises:
selecting at least one category as the predefined association category from a plurality of categories to which the plurality of first entries belong, wherein the at least one category causes the declaration information to be assessed and another declaration information to correlate and mutually affect a risk prediction probability.

11. An apparatus of generating a risk assessing model, comprising:
a preprocessing module configured to preprocess a plurality of declaration information to obtain a plurality of first entries included in the plurality of declaration information;
a graph network analysis module configured to perform a graph network analysis on information related to the plurality of first entries so as to generate a first result;
a feature engineering processing module configured to perform a feature engineering processing on the plurality of first entries so as to generate a second result; and
a training module configured to train a neural network by using the first result and the second result so as to obtain the risk assessing model.

12. The apparatus according to claim 11, wherein the graph network analysis module is further configured to:
select, from all the first entries included in the plurality of declaration information, first entries in conformity with at least one predefined association category as second entries; and
input the second entries as node information and an association relationship between the second entries as edge information into a graph network so as to generate a plurality of first vectors corresponding to the second entries respectively as the first result.

13. The apparatus according to claim 12, wherein the feature engineering processing module is further configured to:
perform the feature engineering processing on the plurality of first entries so as to obtain a plurality of second vectors corresponding to the plurality of first entries as the second result.

14. The apparatus according to claim 13, wherein the training module is further configured to:
generate a plurality of third vectors respectively corresponding to the plurality of declaration information according to the plurality of first vectors and the plurality of second vectors; and
train the neural network by using the plurality of third vectors so as to obtain the risk assessing model.

15. The apparatus according to claim 12, wherein the graph network analysis module is further configured to:
select at least one category as the predefined association category from a plurality of categories to which the plurality of first entries in the plurality of declaration information belong, wherein the at least one category causes the declaration information to correlate and mutually affect a risk prediction probability.

16. An apparatus of assessing a risk, comprising:
a preprocessing module configured to preprocess a declaration information to be assessed to obtain a plurality of first entries included in the declaration information to be assessed;
a graph network analysis module configured to perform a graph network analysis on information related to the plurality of first entries so as to generate a first result;
a feature engineering processing module configured to perform a feature engineering processing on the plurality of first entries so as to generate a second result; and
an assessment module configured to obtain a risk assessment result of the declaration information to be assessed by using a risk assessing model according to the first result and the second result,
wherein the risk assessing model is obtained by using the method of generating a risk assessing model according to claim 1 through a plurality of declaration information.

17. The apparatus of assessing a risk according to claim 16, wherein the graph network analysis module is further configured to:
select, from the plurality of first entries, first entries in conformity with at least one predefined association category as second entries; and
input the second entries as node information and an association relationship between the second entries as edge information into a graph network so as to generate a first vector corresponding to the second entries as the first result.

18. The apparatus of assessing a risk according to claim 17, wherein the feature engineering processing module is further configured to:
perform the feature engineering processing on the plurality of first entries so as to obtain a second vector corresponding to the plurality of first entries as the second result.

19. The apparatus of assessing a risk according to claim 18, wherein the assessment module is further configured to:
generate a third vector corresponding to the declaration information to be assessed according to the first vector and the second vector; and
input the third vector into the risk assessing model so as to obtain the risk assessment result of the declaration information to be assessed.

20. The apparatus of assessing a risk according to claim 17, wherein the graph network analysis module is further configured to:
select at least one category as the predefined association category from a plurality of categories to which the plurality of first entries belong, wherein the at least one category causes the declaration information to be assessed and another declaration information to correlate and mutually affect a risk prediction probability.
